# EUROPEAN PATENT SPECIFICATION

(11) **EP 4 609 001 B1**
(45) Date of publication and mention of the grant of the patent: **24.06.2026**
(21) Application number: 24700332.0
(22) Date of filing: 10.01.2024
(51) Int. Cl.: C22B 7/00, C22B 3/00, H01M 10/54

(54) **A METHOD FOR SEPARATING MANGANESE IN LEACHING OF COBALT AND/OR NICKEL FROM DELITHIATED SOLID RAW MATERIAL AND USE OF DELITHIATED SOLID RAW MATERIAL COMPRISING CATHODE MATERIAL**
VERFAHREN ZUR ABSCHEIDUNG VON MANGAN BEIM AUSLAUGEN VON KOBALT UND/ODER NICKEL AUS DEM LITHIUMHALTIGEN FESTEN ROHSTOFF UND VERWENDUNG DES LITHIUMHALTIGEN FESTEN ROHSTOFFES
PROCÉDÉ DE SÉPARATION DE MANGANÈSE DANS LA LIXIVIATION DE COBALT ET/OU DE NICKEL À PARTIR D'UNE MATIÈRE PREMIÈRE SOLIDE DÉLITHIÉE ET UTILISATION D'UNE MATIÈRE PREMIÈRE SOLIDE DÉLITHIÉE COMPRENANT UN MATÉRIAU DE CATHODE

(30) Priority: 10.01.2023 FI 20235028
(43) Date of publication of application: 03.09.2025
(73) Proprietor: University of Oulu, 90014 University of Oulu (FI)
(72) Inventor: LASSI, Ulla, 90014 University of Oulu (FI); KAUPPINEN, Toni, 90014 University of Oulu (FI); MANNINEN, Mikael, 90014 University of Oulu (FI); VIELMA, Tuomas, 90014 University of Oulu (FI)
(74) Representative: Berggren Oy
(86) International application number: PCT/FI2024/050008
(87) International publication number: WO 2024/149937

(56) References cited:
- EP-A1- 3 202 928
- WO-A1-2019/060996
- WO-A1-2022/050248
- CN-A- 105 206 889
- CN-A- 112 079 369
- CN-A- 112 930 618
- CN-B- 106 904 667
- JP-A- 2021 070 843
- JP-A- 2022 182 229

## Description

### Field of the application

The present application relates to methods for treating cobalt and/or nickel, more particularly to a method for separating cobalt and/or nickel from manganese. The present application also relates to treating material comprising cathode material by leaching. The present application also relates to use of delithiated solid raw material comprising cathode material.

### Background

It is desired to recover and recycle metals included in recyclable materials, such as lithium-ion batteries. When used lithium batteries are processed for recycling, the batteries are collected, dismantled, and shredded. The shredded material is processed to obtain so called black mass, which contains high amounts of metals of interest, including lithium, cobalt and nickel, and also manganese. It is desired to extract these critical metals from the black mass and reuse them in the production of new batteries and/or in other applications as raw materials.

The metals contained in black mass are separated and recovered usually by leaching with sulfuric acid. However there are challenges in separating the metals in the process, especially separating manganese from the other metals.

In the common hydrometallurgical lithium-ion battery recycling process, trivalent cobalt, nickel and manganese are reduced using reducing agents such as hydrogen peroxide or citric acid. Reductive leaching produces pregnant leach solution (PLS) containing nickel, cobalt and manganese in varying compositions. In some processes manganese is removed by oxidation before the nickel and cobalt separation.

However the prior art methods are complex and require additional reagents, equipment and/or several process steps. Common industrial methods for manganese control or removal include solvent extraction and ion exchange to separate manganese from other metals, using gaseous oxidants such as ozone, oxygen or air, and/or introducing strong oxidation chemicals, such as ammonium persulfate or potassium permanganate, to a manganese containing solution.

Solvent extraction and ion exchange are efficient processes for separation of metals but require large investments and have high operational cost. Oxidation of manganese using external oxidation chemicals often introduces ions of alkali metals or alkaline earth metals to the solution, which is not desired.

Separating the different metals from each other is complex, as the presence of other metals in the leaching solution disturbs the separation of a particular metal, and restricts the number of useful methods for separating the particular metal. EP3202928A1 discloses a method for leaching lithium ion battery scrap and a method for recovering metals from the lithium ion battery scrap, which can effectively reduce treatment costs.

JP2021-070843A discloses a method for separating manganese from an alloy obtained by melting a waste lithium-ion battery and recovering valuable metals such as copper, nickel and cobalt.

CN105206889A discloses a method for treating a cathode material of a waste nickel-cobalt-manganese ternary battery and WO20019/060996A1 discloses a process for recycling lithium-ion batteries.

There is a need for efficient, simple and economic methods for leaching cobalt and/or nickel from raw materials and/or for separating manganese, which avoid prior art deficiencies, such as the need for reducing agents, solvent extraction, ion exchange and/or oxidation using external oxidation chemicals. There is a need to expand the number of useful methods for separating metals from leaching solutions.

### Summary

In the present invention it was found out how to overcome problems of prior art and how to provide new and efficient methods for treating materials comprising lithium, cobalt, nickel and/or manganese. Selective leaching of high-valent cobalt and nickel using manganese as reducing agent was achieved. It was possible to separate manganese from lithium, cobalt and/or nickel already during leaching.

The present method uses manganese as a reducing agent at low pH for oxidized cobalt and nickel present in delithiated solid raw material, for example in delithiated lithium-ion battery black mass, or a leach solution obtained from such delithiated raw material. The method can also be used as manganese controlling method and/or in purification of manganese dioxide precipitates, sludges and concentrates from oxidized cobalt and nickel, which are not readily dissolved in acidic solutions. Similarly, delithiated cobalt and nickel solids, and/or solutions or dispersions containing thereof, can be purified from manganese using high valent cobalt and nickel. "Delithiated" as used herein may refer to material obtained from a delithiation leaching step, such as from a reducing agent free delithiation leaching step.

The present invention provides a method for separating manganese in leaching of cobalt and/or nickel from delithiated solid raw material, as disclosed in claim

The present invention also provides use of delithiated solid raw material comprising cathode material, such as delithiated lithium-ion battery black mass, in the method.

The main embodiments are characterized in the independent claims. Various embodiments are disclosed in the dependent claims. The features of the embodiments and the examples disclosed herein are mutually freely combinable unless otherwise explicitly stated.

Treating solid raw material obtained from a delithiation leaching step is a completely different process from treating solid material which contains all the original metals, especially lithium, as applicable further treatment methods are strongly limited by the composition of the raw material.

The present process enables a production chain wherein the metals can be separated already in leaching processes. First lithium is leached in the delithiation step, wherein most of the lithium is separated. Subsequently manganese is separated in the second leaching by precipitating leaving only cobalt and nickel in the solution. With this process it is possible to efficiently leach all the metals from the original raw material and avoid further separation of different metals from a mixture of metals in the solution with additional processes.

The present method simplifies the recycling of battery materials. The metals can be efficiently recovered and/or leached without adding further chemicals, which could interfere the process and/or further process steps. For example as manganese is not oxidized with external chemicals, the process is simpler, and no additional ions are left in leach solution.

Further, there is no need to use excess amount of manganese in leach solution. The used manganese can be recovered as manganese dioxide, which can be utilized or provided as valuable raw material. For example, manganese may be used in fertilizers.

The present process can be utilized not only in battery industry but also in other industries and/or recycling processes, which generate suitable precipitates, such as metals and/or metal salts or solutions or dispersions thereof, such as nickel and/or cobalt sulphates.

### Brief description of figures

Figure 1 shows an example of yield of leached NCM metals during a battery recycling process.
Figure 2 shows another example of yield of leached NCM metals as a function of time during a battery recycling process.
Figure 3 shows an example of concentrations of leached NCM metals as a function of time during a battery recycling process.
Figure 4 shows an example of concentrations of leached NCM metals as a function of time.
Figure 5 shows an example of effect of temperature on the yield of manganese as a function of time.
Figure 6 shows a flowchart of the method.

### Detailed description

In this specification, percentage values, unless specifically indicated otherwise, are based on weight (w/w, by weight, or wt%). If any numerical ranges are provided, the ranges include also the upper and lower values. In examples the embodiments specified with the open term "comprise" may be limited with a closed term "consisting of".

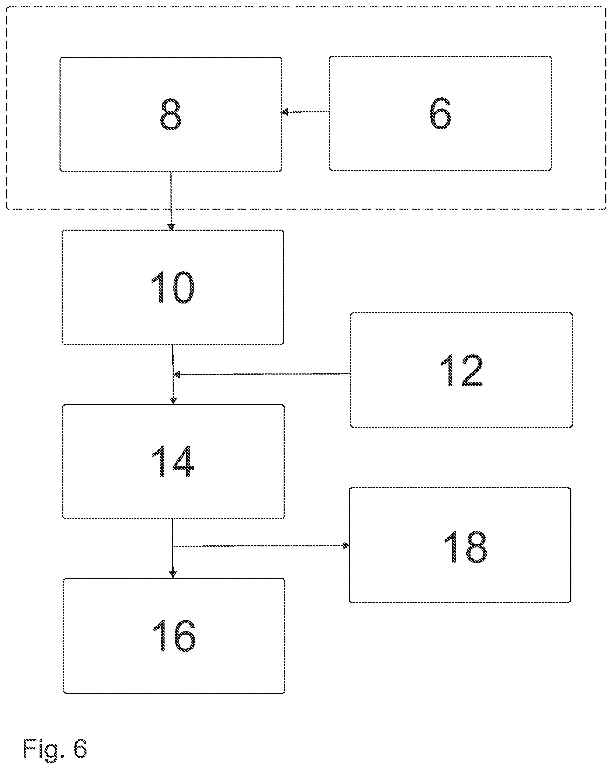

The present disclosure provides a method for treating cobalt and/or nickel from delithiated solid raw material, such as solid raw material obtained from a delithiation leaching step, and/or a method for separating manganese in leaching, such as for separating manganese in leaching of cobalt and/or nickel from delithiated solid raw material. Figure 6 shows a flowchart of an example of the method also showing optional method steps separated with a dashed line.

The method may comprise
- providing a leach solution 14 comprising cobalt and/or nickel obtained from delithiated solid raw material, such as from solid raw material obtained from a delithiation leaching step 8, in acidic solution,
- providing manganese in the leach solution 14, preferably as the only reducing agent, to reduce cobalt and/or nickel in the leach solution, and
- allowing the manganese to reduce cobalt and/or nickel, and subsequently precipitate 16 as manganese dioxide, while the cobalt and/or nickel are and/or remain dissolved 18.

The cobalt and/or nickel are leached from solid raw material obtained from a delithiation leaching step 8 *i.e.* from delithiated (solid) raw material. Figure 6 shows the delithiation leaching step 8 as an optional feature. The leach solution may be formed when carrying out the method, or the leach solution may be obtained from another process and/or location. The leach solution comprising cobalt and/or nickel obtained from solid raw material obtained from a delithiation leaching step may be obtained from a process comprising combining delithiated solid raw material comprising cobalt and/or nickel with acidic solution, which is an aqueous solution. The acidic solution, which may be called as acid solution, may be a solution of one or more suitable acids, such as sulfuric acid, nitric acid, and/or hydrochloric acid. The acid may be provided as strong sulfuric acid solution, for example having a concentration of acid of 0.8 mol/l or more, such as 1.0 mol/l or more, for example 1.2 mol/l or more, for example in the range of 1.0-1.4 mol/l. Sulfuric acid may be used in most cases. The embodiments and examples relating to sulfuric acid discussed herein may be applied to other acids as well. The leach solution may comprise cobalt and/or nickel in sulfuric acid solution. The cobalt and/nickel and any other applicable metals may be partly or fully leached, *i.e.* solubilized or dissolved, in the leach solution. If the metals are not fully dissolved and/or insoluble impurities are present, the leach solution may be considered as a leach dispersion, which option is herein included in the term "leach solution". The "leach solution" may also refer to a solution comprising dispersed solid material, and/or to an acid solution to which the material to be leached is added.

When manganese is used as the reducing agent and is finally allowed to precipitate as manganese dioxide, the cobalt and/or nickel are completely or substantially completely dissolved in the leach solution. The manganese will precipitate when other oxidized metals, such as the cobalt and/or nickel, will start oxidizing the soluble manganese. The precipitated manganese is separated, which may also include recovering the precipitated manganese.

The method may comprise
- providing delithiated solid raw material 10, such as raw material obtained from a delithiation leaching step, comprising cobalt and/or nickel,
- providing acidic solution 12, such as sulfuric acid solution,
- combining the solid raw material 10 with the acidic solution 12 and preferably manganese,
- allowing cobalt and/or nickel in the delithiated solid raw material to leach to obtain the leach solution comprising cobalt and/or nickel 18.

The delithiated solid raw material 10 comprising cobalt and/or nickel may be any applicable raw material, such as material which can be leached. The delithiated solid raw material may be originally obtained from recycled or recyclable solid raw material 6, such as material obtained from batteries or processes of battery industry, for example battery black mass, such as cathode material or material comprising cathode material, or materials obtained from processes of nickel and/or cobalt industry. These initial materials are not delithiated. Figure 6 shows the step of providing the initial solid raw material 6 as an optional feature.

The black mass discussed herein may be obtained from lithium-ion batteries (LiB). The batteries are recycled, wherein they are dismantled and cathode and anode materials are separated and disintegrated. The black mass may be provided as disintegrated material, such as crushed and/or ground particles, granules or the like. The black mass includes at least the cathode material, and it may also include the anode material, and/or electrolyte materials including organic compounds. The cathode material may comprise nickel, cobalt and manganese (NCM), and lithium in an amount in the range of 1-35% by weight. The cathode material may also comprise smaller amounts of for example tin, zirconium, zinc, copper, iron, fluoride, phosphorus and aluminium. Manganese is an important element in the cathode materials of lithium-ion batteries. It stabilizes LiNiO₂ structure, allows cobalt to improve conductivity of the cathode material and improves thermal stability of the material.

However undesired compounds may be removed from the initial black mass to obtain processed black mass suitable for the present purposes, such as material comprising mainly or substantially cathode material. For example the organic compounds are usually not desired as they may interfere or prevent the separation of metals in leaching. The black mass may be washed in one or more washing steps with water and/or with organic solvent(s). For example the organic compounds may be washed with organic solvent. Also one or more heating steps may be used to pyrolyze or evaporate undesired material, for example in combination with the washing step(s) or as an alternative method for removing undesired compounds. The anode material may include or be formed substantially of graphite or silicon.

A processed or pretreated black mass, which is purified of one or more substances and/or otherwise processed, may be obtained from such process steps, and can be used in leaching. The black mass discussed herein refers to such processed or pretreated black mass, unless otherwise mentioned.

In leaching the black mass, or other suitable solid raw material, is combined with strong acid, such as sulfuric acid, more particularly concentrated sulfuric acid. The acid may be present as an aqueous solution, or the acid may be added to an aqueous solution, such as water, wherein the pH of the solution is very low, such as pH in the range of 0-5, such as 1-2. The concentration of the sulfuric acid may be in the range of 1.0-1.5 M in most cases.

Combining the raw material with the acid is usually done by dispersing the raw material to the acid, for example in mixing by using one or more suitable mixing means and/or mixers. An acid dispersion, which may be called as leach dispersion, comprising one or more metals, initially in solid form, such as at least cobalt and/or nickel, is obtained. The dispersed metals are leached to obtain a solution comprising at least partly dissolved leached metals, *i.e.* a leach solution. The acid dispersion or solution may be a sulfuric acid dispersion or solution comprising cobalt and/or nickel. In the case of lithium-ion battery material the acid dispersion or solution comprises cobalt and nickel and also lithium and manganese.

In one embodiment the solid raw obtained from a delithiation leaching step material is delithiated material comprising cathode material, or is cathode material or is obtained from cathode material, such as lithium-ion battery black mass comprising lithium, cobalt, nickel and manganese. In such case the method may be a method for separating manganese in leaching of lithium, cobalt and/or nickel from material comprising delithiated cathode material, such as delithiated lithium-ion battery black mass.

The solid raw material is obtained from a delithiation leaching step 8, and it may be in a form of a slurry, which may form a dispersion or which may be dispersed in acid, such as sulfuric acid. Such a leaching may be called as a preliminary leaching and/or a first leaching, and the metals leached in this leaching may be recovered. Preferably no reducing agents are used in the preliminary leaching step. In such case the metals present in the delithiated solid raw material maintain their reducing ability. In one embodiment the delithiated solid raw material is obtained from a reducing agent free delithiation leaching step, *i.e.* which is carried out in the absence of reducing agent(s) or added reducing agent(s). In such case the metals in the delithiated solid raw material are not reduced and can be efficiently reduced with manganese in the present method. The reducing agent free delithiation may use carbon dioxide as a leaching agent, or any other suitable leaching agent, for example as the only added reagent in the leaching. The reducing agent free delithiation may use non-delithiated solid lithium-ion battery waste material such as black mass as the starting material, or any other suitable non-delithiated solid raw material.

One example of a reducing agent free delithiation leaching (the first leaching, 8) comprises
- providing water and/or an aqueous solution,
- providing solid lithium-ion battery waste material,
- adding the solid lithium-ion battery waste material to the water and/or to the aqueous solution to obtain a mixture, and providing the mixture in a reactor,
- providing CO₂ to the reactor, preferably as the only reactant and/or as the only added reactant and/or in the absence of added reducing agent(s),
- maintaining the pressure of the reactor containing CO₂ at 50 bar or less, such as in the range of 10-50 bar, for example in the range of 25-40 bar,
- maintaining the temperature of the mixture in the range of 120-250°C, such as in the range of 150-250°C,
- reacting for a time required to leach the lithium, such as reacting for 30 minutes or more, such as reacting for 30-240 minutes,
- optionally lowering the temperature of the mixture to 90°C or less, such as to 25-90°C, and
- separating liquid comprising leached lithium and/or delithiated solid material.

The method may comprises carrying out the reaction:

MeSO₄ + 2LiMeO₂ + CO₃²⁻ → Li₂SO₄ + 2Li₁₋ₓMeO₂ + MeCO₃,

wherein X=0-1, and/or the reaction:

MeSO₄ + 2LiMeO₂ → Li₂SO₄ + 2Li₁₋ₓMeO₂ + Me(OH)₂,

wherein X=0-1.

In one example the solid lithium-ion battery waste material comprises Ni-rich black mass comprising cathode material, wherein 50 mol-% or more of transition metals of the cathode material comprise nickel.

The present method may be considered as a second leaching. In one embodiment the leach solution, or leach dispersion, comprising cobalt and/or nickel in acid solution, is obtained from preliminary leaching step, which may be a delithiation leaching step, wherein 70-95% by weight of the solid material or metals is/are leached and preferably recovered, such as about 80-90% by weight of lithium is leached by disproportionation reaction, and an amount of unleached material or metals is left in solution. In one embodiment the method comprises carrying out a separate delithiation or preliminary/first leaching step before providing the manganese by adding manganese. The delithiation leaching step may be carried out in strongly acidic solution, such as sulfuric acid solution with high solid/liquid (S/L) ratio in slight excess of acid.

The method may be carried out at conditions allowing first reaction (1) to take place

LiMeO₂ + 2H⁺ = 0.5 MeO₂ + 0.5 Me²⁺ + Li⁺ + H₂O,

where Me = Ni, Co or Mn (1),
and subsequently reaction (2) to take place

MeO₂+ Mn²⁺ = Me²⁺ + MnO₂,

where Me = Ni or Co (2).

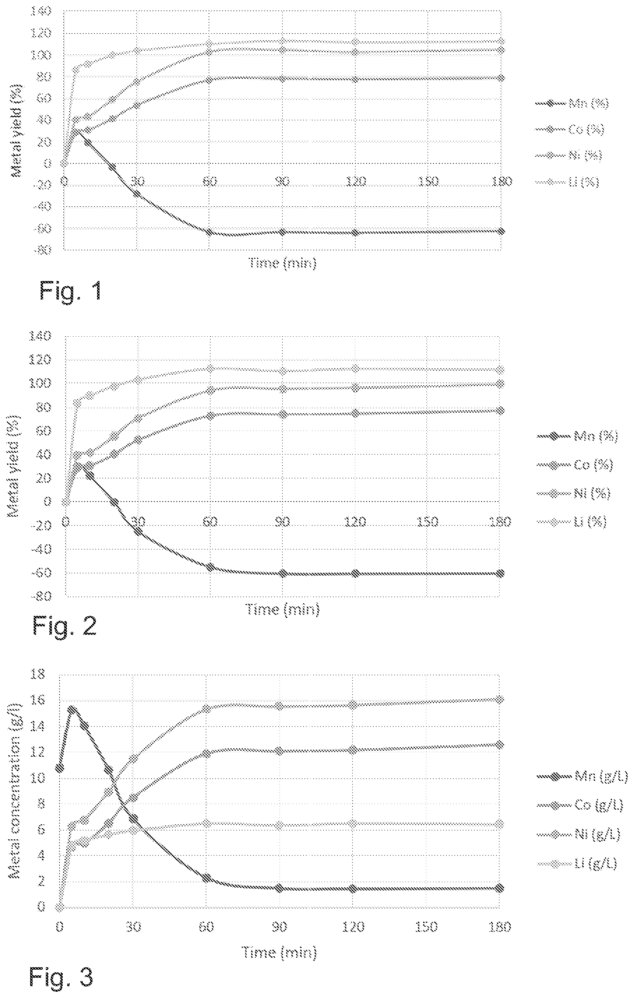

As can be seen from an example presented in Figure 1, in a leach process of metals including cobalt, nickel and lithium, when carried out in the presence of adequate amount of manganese, the leaching is fast and practically all of cobalt, nickel and lithium are leached in about 60 minutes. The manganese acts as a reducing agent facilitating leaching of these metals, and as the manganese oxidizes in these reactions by the oxidized nickel and/or cobalt, it starts precipitating as manganese dioxide in a short time, for example already after 10 minutes. In about 60 minutes all or substantially all of the manganese is precipitated and can be recovered thus leaving the other metals dissolved in the solution so they can be efficiently recovered in the absence of manganese. The solution, such as the initial acid solution or the leach solution, may be heated to facilitate the reactions, preferably to a temperature of 100°C or slightly below 100°C, such as to 98°C or less, or to 95°C or less, but to at least 70°C, to at least 75°C or to at least 80°C.

The reaction may be allowed to proceed at suitable conditions and/or until all or substantially all the manganese is precipitated as manganese dioxide while all or substantially all the cobalt and/or nickel are dissolved. In one embodiment the leaching and/or manganese precipitation is carried out at a temperature in the range of 70-100°C, such as 70-98°C, 70-95°C or 75-95°C. The method may comprise heating the solution, and the obtained temperature may be maintained as long as necessary to obtain the desired reactions, such as complete or substantial leaching and/or precipitation, for example at least 30 minutes, at least 60 minutes, or at least 120 minutes, such as for 30-180 minutes.

The reaction may be carried out in a reactor or other reaction vessel, which may be equipped with means for adjusting the temperature, such as heating means, for example an electric heater. The reaction vessel may be also equipped with one or more mixer(s), means for measuring pH, means for measuring temperature, means for inputting solid raw material and/or liquid, and/or means for recovering and/or outputting precipitate and/or liquid. One or more suitable filters may be used for separating solids.

The present method can be used for treating any suitable solid or liquid raw material comprising cobalt and/or nickel. In one embodiment the method is a method for selectively leaching cobalt and/or nickel from solid raw material. One example provides a method for selectively leaching cobalt and nickel from lithium-ion battery cathode material and simultaneously precipitating manganese during the leaching stage. In one embodiment the method is a method for using solid raw material, such as cathode material, comprising nickel and cobalt, as an oxidizing agent of manganese. All these options are included in the concepts of treating cobalt and/or nickel and/or separating cobalt and/or nickel from manganese.

Providing solid raw material comprising cobalt and/or nickel, the solid raw material being obtained from a delithiation (first) leaching step, and carrying out the present method for separating manganese in the second leaching by providing manganese in the leach solution as the only reducing agent to reduce cobalt and/or nickel in the leach solution, enable selective of leaching of the remaining NCM metals from delithiated material with manganese. The present method is carried out with material having very low lithium content, so the method can concentrate on leaching the non-lithium metals which could not be leached in the first leaching. For example in the delithiation about 80 mol-% or more, preferably about 90 mol-% or more, of original lithium is separated and/or removed. More particularly, the separating of the non-lithium metals can be carried out at conditions and/or with methods which are optimized and/or specific for separating these metals, preferably one metal at the time.

"Delithiated" or "Li-deficient", which terms may be used interchangeably, refer to material wherein the lithium content has been substantially reduced compared to the original material, which has not delithiated, preferably in a reducing agent free leaching. The substantially reduced lithium content, *i.e.* residual lithium content, may be 25% of the original lithium content or less, such as 20% or less, or even 15% or less, 12% or less, 10% or less, or 5% or less. The percentages may be mol-%. The original lithium content, such as in the original solid material, for example crushed and/or ground lithium ion battery material, may be substantially stoichiometrically equal to the total content of NCM metals.

The delithiated solid material can be identified by identifying the metals and contents thereof in the solid material. The (residual) lithium content may be 20 mol-% or less, such as 10 mol-% or less, of the total metal content in the solid raw material. The presence of the other metals, such as NMC metals, indicate the origin of the material and help distinguishing from corresponding material which has not been delithiated. Also other properties of the solid raw material can be used to identify the material. For example the redox potential of the material can be measured, for example the redox potential of the present solid raw material may be, when solubilized in acid, such as sulfuric acid, in the range of 500-1600 mV. The redox potential may be measured by using a silver/silver chloride reference electrode.

In one embodiment the method is a method for purifying cobalt- and/or nickel-containing solutions from manganese and/or a method for removing manganese from a solution or dispersion comprising cobalt and/or nickel or from solid raw material. The methods may comprise leaching and/or using a leach solution.

The manganese may be present in the leach solution and/or manganese may be added. In one embodiment the (solid) raw material comprises manganese. This is usually the case when delithiated lithium-ion battery black mass is used as raw material. However the amount of manganese already present in the black mass is usually not enough to act as a reducing agent for all the nickel and/or cobalt present in the black mass. Further, present NMC 811 batteries contain 80% by weight nickel, 10% by weight cobalt and 10% by weight manganese, so the portion of manganese in recycled material may be even lower in the future.

In one embodiment the method comprises providing the manganese by adding manganese to the leach solution comprising cobalt and/or nickel. Such a leach solution may be for example formed from the black mass or other cathode material containing material, which does not contain enough manganese to reduce all the cobalt and nickel. However if the aim is only to remove the manganese, there is usually no need to add additional manganese.

In one embodiment the method comprises providing the manganese by adding manganese to the acidic solution, such as sulfuric acid solution, before combining with cobalt and/or nickel.

The manganese may be added in an amount sufficient to adjust the concentration of manganese to a level required to enable complete leaching of the cobalt and/or nickel, but preferably to avoid excess manganese concentration. The required manganese concentration can be calculated from the known or determined amounts of leachable metals in the solid raw material and/or leached metals in the leach solution.

The manganese preferably is the only reducing agent in the leach solution. The amount of manganese shall therefore be adequate to allow the desired reduction reactions to be carried out to leach all the desired metals, including the cobalt and/or nickel. No other reducing agents are added, or are present in the solution, at least in substantial amounts. Any impurities which may act as reducing agents may however be present, but the effect of such agents is usually minor. Using manganese as the only reducing agent simplifies the process, especially in the case of battery material already containing an amount of manganese and enables efficiently removing it thus leaving a leach solution wherein metals of interest are completely dissolved and can be easily recovered.

The method is preferably carried out in the absence of further reducing agents, such as sulphur dioxide, hydrogen peroxide or organic acids, for example citric acid.

It is also desired to carry out the method also without other additives or additional method steps used generally in prior art. In one embodiment the method is carried out in the absence of solvent extraction. In one embodiment the method is carried out in the absence of ion exchange for removing manganese. In one embodiment the method is carried out in the absence of oxidation using further oxidation chemicals. This simplifies the process and reduces costs. No undesired reagents, ions, solvents etc. are left in the solution which could interfere further steps, such as recovery of metals.

After the leaching most of the metals, such as lithium, cobalt and/or nickel, remain dissolved and can be recovered and/or separated into fractions by using any suitable known methods, such as solvent extraction, conversion, ion exchange and/or crystallization. The lithium in this second step solution is residual lithium from the delithiating step. The solution containing the dissolved metals, but preferably not manganese, may be transported or conveyed to another location and/or to another operator for recovering the dissolved metals. The metals may be reused as raw materials, for example in battery production and/or in other applications. The recoveries of different metals may be carried out in varying order, for example cobalt and/or nickel may be recovered before lithium. For example lithium can be separated and recovered by reacting lithium into its carbonate or phosphate, or converted into lithium hydroxide, which reaction products can be separated and collected. Lithium can be also recovered by solvent extraction, after which a further conversion or crystallization can be carried out. It is advantageous for lithium recovery that the solution does not contain other metals, or contains a reduced amount of other metals, including manganese.

Nickel can be separated and recovered, preferably before lithium recovery, with methods such as solvent extraction to produce nickel sulphate solution, which may be further purified by ion exchange and crystallization. Similarly, cobalt can be separated and recovered with methods such as solvent extraction to produce cobalt sulphate, which may be further purified with ion exchange and crystallization. Cobalt and nickel may be also separated and recovered simultaneously.

However manganese is not separated and recovered in the present method with conventional methods such as ion exchange, solvent extraction and/or oxidative precipitation using sulphur dioxide and air. As manganese is precipitated already during the leaching, it can be separated and recovered first, and the treatment of the dissolved metals can be carried out subsequently in the absence of manganese. No additional chemicals or ions are left in the solution from the removal or manganese which could interfere the further process steps. Therefore the recovery and reuse of the other metals is simpler and enables using a variety of different methods.

The method may comprise recovering the precipitated manganese dioxide, and/or obtaining leached lithium, cobalt and/or nickel in a solution. The method may further comprise recovering the leached lithium, cobalt and/or nickel from the leach solution.

The recovered manganese dioxide may be used as raw material in any suitable application. It can be used for example for preparing batteries or for example as a pigment. In another example it may be provided as a fertilizer or used for preparing a fertilizer. Manganous oxide (MnO), which can be used as a fertilizer, can be prepared from the manganese dioxide. A fertilizer composition may be prepared by combining the recovered manganese dioxide, or manganese oxide obtained from the manganese dioxide, with one or more other fertilizer agent(s) and/or excipient(s). The manganese dioxide may be used to prepare manganous oxide for other purposes as well, such as to be used as a food additive or supplement.

The present disclosure provides use of delithiated material (10) comprising cathode material, such as lithium-ion battery black mass, in any of the methods disclosed herein.

The process including the present method may involve one or more operators. One operator may provide the raw material. The same or another operator may prepare and/or process the solid raw material, such as prepare the black mass. Such an operator may be a recycler of batteries or a processor of recycled batteries. The same or another operator may prepare a leach solution derived from the black mass, which leach solution may be obtained from a preliminary leaching. The same or another operator may carry out the present method in a first leaching or in a second leaching for an existing leach solution. In one example a first leach solution is prepared by one operator, which provides the leach solution to further processing with the present method. Such a leach solution may contain partly leached cobalt and/or nickel, and with the present method these are fully leached. The present method may be carried out at the same location and/or facilities as the previous steps, or it may be carried out at another location and/or facilities. The operator carrying out the present method including precipitation of the manganese may also recover the manganese and/or the cobalt and/or nickel or other metals, or one or more of the recovery steps may be carried out by one or more further operators, and at the same or different location and/or facilities. For example the leach solution wherefrom manganese has been recovered, can be provided to a variety of different operators, who can recover the other metals from the solution by using desired methods, and reuse one or more of the recovered metals and/or provide the metal(s) to further use, for example to another operator, which may operate at the field of manufacturing products from the metal(s).

The present method thus forming a part of a process chain involving more than one operator can help the operators to concentrate on process steps which are optimal for each operator, for example in respect of facilities, equipment, methods and/or know-how, and/or in respect of business of each operator. The present method and/or a part or the whole process chain can be optimized and carried out to obtain the best efficiency at one or more steps, to save costs at one or more steps, and/or to work in a most environmentally safe manner in one or more steps.

The methods disclosed herein may be used for leaching cathode material obtained from lithium-ion batteries for example with the following ways, which may be also applied to other suitable raw materials as well.

In one example cathode material or battery black mass containing cathode material is introduced to manganese containing acidic solution, such as sulfuric acid solution. Delithiation occurs rapidly in the early stages of leaching. Delithiation of the material leads to rapid dissolution of approximately half of the transition metals present in cathode material according to reaction equation (1).

LiMeO₂ + 2H⁺ = 0.5 MeO₂ + 0.5 Me²⁺ + Li⁺ + H₂O,

where Me = Ni, Co or Mn (1)

During this time period also Mn concentration increases (30% yield after 5 minutes). After rapid leaching stage, nickel and cobalt leaching rate slows down and manganese content of the solution starts to decrease due to precipitation of manganese, as shown in Figure 1. In 10 minutes about 90% of lithium is leached.

In one example NCM cathode material is leached without additional manganese. This leads to Mn-free solution, but also incomplete dissolution of cobalt and nickel, unless adequate amount of different reductant is used. This is however not desired in most cases.

In one example NCM cathode material is leached with optimal initial manganese concentration. This leads to Mn-free solution and complete dissolution of cobalt and nickel. The optimal initial manganese concentration can be calculated from the known amounts of leachable metals in the cathode material. The manganese concentration in the solution may be adjusted by adding suitable amount of manganese to obtain the optimal initial manganese concentration resulting in complete dissolution of the cobalt and nickel.

In one example majority of lithium and about half of NCM metals are leached in a separate leaching process. Liquid and solids are separated. Li-deficient solid is used in a separate solution to control manganese and dissolve (additional) cobalt and nickel. This leads to solution richer in Li content and allows for example to control Mn content in recycled LiB leaching solutions without adding majority of lithium. Co (and Mn) concentrations are higher than needed in old technology that end up now in recycling processes.

In one example delithiation step is performed in very strong sulfuric acid solution with high S/L in slight excess of acid. Reacted slurry is introduced to a Mn-containing solution heated to a sufficient temperature. This leads to high initial and residual acid concentration in initial delithiation step, but does not result in high acid concentration after the manganese precipitation reaction.

### Examples

### Example 1.

NCM (1:1:1) cathode material was leached using 1 M H₂SO₄ at 70°C temperature. Initially concentrated acid solution dissolves cobalt, nickel and manganese according to reaction equation (1). Between 10 and 30 minutes of reaction time free acid decreased to a level close to 0.7 M, where oxidized Ni and Co start to oxidize Mn²⁺ instead of H₂O according to equation (2).

LiMeO₂ + 2H⁺ = 0.5 MeO₂ + 0.5 Me²⁺ + Li⁺ + H₂O,

where Me = Ni, Co or Mn (1)

MeO₂+ Mn²⁺ = Me²⁺ + MnO₂,

where Me = Ni or Co (2).

### Example 2.

NCM83 (Ni83:Co12:Mn5) cathode material was leached using 1 M H₂SO₄ with initial Mn²⁺ concentration of 12.2 g/l. After 240 minutes of reaction manganese concentration had decreased to 1.56 g/l, while nickel concentration had increased to 22.1 g/l. Separated leaching residue comprised 74.4% of manganese, 0.3% of cobalt and 0.2% of nickel by weight.

### Example 3

Different examples of the reaction were carried out and analysed, and the results are presented in the following. In general the procedure comprised preparing a sulfuric acid solution with desired concentration into a flask, and a desired amount of manganese was added. The solution is preheated in a reactor until a desired temperature is obtained. A sample is taken at 0 minutes to determine the manganese concentration. The selected solid matter is added, and the reaction time is started. The reaction mixture is mixed with a magnetic stirrer, and samples are taken at predetermined time points. The samples are immediately filtered through a syringe filter and diluted into a measuring vial. When the reaction has proceeded, the solution and the formed precipitate are separated by filtering. The solids are dried overnight in an oven at 105°C.

Figure 1 shows yield of leached NCM metals during one battery recycling process as a function of time (T = 95°C, S/L = 40 g/l, rpm = 500, Mn = 10 g/l and 1.2 M H₂SO₄). The uppermost line at the end of the reaction represents Li (%), the next line represents Ni (%), the next line represents Co (%) and the lowermost line represents Mn (%), which is precipitated.

Figure 2 shows yield of leached NCM metals during another battery recycling process as a function of time (T = 95°C, S/L = 40 g/l, rpm = 500, Mn = 10 g/l and 1.5 M H₂SO₄). The uppermost line at the end of the reaction represents Li (%), the next line represents Ni (%), the next line represents Co (%) and the lowermost line represents Mn (%), which is precipitated.

Figure 3 shows concentrations of leached NCM metals during still another battery recycling process as a function of time (T = 95°C, S/L = 40 g/l, rpm = 500, Mn = 10 g/l and 1.5 M H₂SO₄). The uppermost line at the end of the reaction represents Ni (g/l), the next line represents Co (g/l), the next line represents Li (g/l) and the lowermost line represents Mn (g/l), which is precipitated.

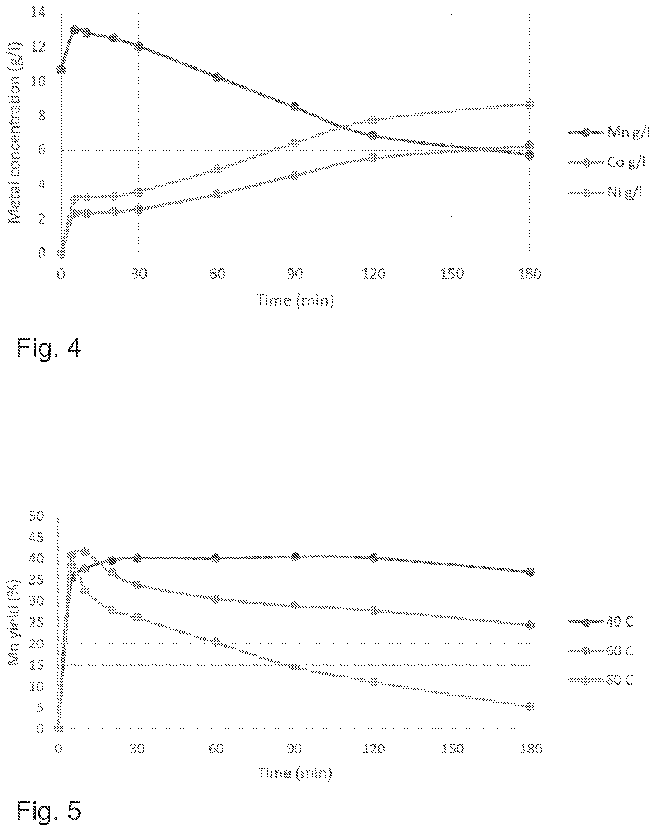

Figure 4 shows concentrations of NCM metals as a function of time (T = 80°C, S/L = 40 g/l, rpm = 500, Mn = 10 g/l and 1.2 M H₂SO₄. The manganese concentration was initially high but lowers due to precipitation.

Figure 5 shows effect of temperature on the yield of manganese as a function of time (S/L = 40 g/l, rpm = 500 and 1.2 M H₂SO₄. For example at 40°C the manganese does not precipitate properly, but at 80°C the precipitation starts already after few minutes.

Table 1 shows a determined composition of a leaching residue from one example of the present reaction.

**Table 1.**

| | Element | Concentration (%) |
|---|---|---|
| 1 | O | 37.1332 |
| 2 | Si | 0.0239 |
| 3 | P | 0.3696 |
| 4 | S | 0.4447 |
| 5 | Cl | 0.0307 |
| 6 | K | 0.018 |
| 7 | Ca | 0.0864 |
| 8 | Mn | 61.3445 |
| 9 | Fe | 0.1112 |
| 10 | Co | 0.3059 |
| 11 | Ni | 0.1319 |

### Example 4: A reducing agent free delithiation leaching by using CO₂

10 grams of NCM811 cathode material was weighted to an autoclave reactor together with 100 ml of H₂O. The reactor was closed, atmosphere was first purged with CO₂ and then pressurized up to 10 bar pressure with CO₂. CO₂ was the only leaching agent and no reducing agent was added. The reactor was heated to 150°C. After reaction time of 60 minutes, the reactor was cooled down to 25°C with circulating water through heat exchange loop. The reactor was pressurized again to 10 bar pressure with CO₂ and cooled down to 15°C to form LiHCO₃ solution. Reaction resulted lithium yield of approximately 80%, with Li concentration of 5 g/l. Delithiated solids were separated.

### Example 5: A reducing agent free delithiation leaching by using CO₂

10 grams of cobalt rich LiB waste was weighted to an autoclave reactor together with 100 ml of H₂O. The reactor was closed, atmosphere was first purged with CO₂ and then pressurized to 10 bar pressure with CO₂. CO₂ was the only leaching agent and no reducing agent was added. The reactor was heated to 180°C. After reaction time of 60 minutes, the reactor was cooled down to 2°C with circulating water through heat exchange loop. The reactor was pressurized again to 10 bar pressure with CO₂ and cooled down to 15°C to form LiHCO₃ solution. Reaction resulted lithium yield of approximately 40%, with Li concentration of 2.5 g/l. Delithiated solids were separated.

### Example 6: A reducing agent free delithiation leaching by using CO₂

Ni-rich battery waste leaching solution was diluted to 0.67 M (excluding Li₂SO₄ content) and is mixed with 20 grams of Ni-rich black mass and added to an autoclave reactor. The reactor was closed, atmosphere was first purged with CO₂ and then pressurized to 26 bar pressure with CO₂. CO₂ was the only leaching agent and no reducing agent was added. The reactor was heated to 180°C. After reaction time of 135 minutes, the reactor was cooled to 90°C with circulating water through heat exchange loop. One of reactor valves was opened to release CO₂ pressure. The reactor was further cooled to room temperature and opened. Delithiated solids and lithium-containing liquid were separated using vacuum filtration. Reaction resulted lithium yield of approximately 98.8%, with Li concentration of 8.7 g/l.

### Example 7: A reducing agent free delithiation leaching by using CO₂

15.15 grams of Ni-rich black mass was added to an autoclave reactor with 100 ml of ion exchanged water. The reactor was closed, atmosphere was first purged with CO₂ and then pressurized to 16 bar pressure with CO₂. CO₂ was the only leaching agent and no reducing agent was added. The reactor was heated to 200°C. As target temperature was reached, pressure of the reactor was 35.8 bars. Pressure peaked at 38.1 bars due to decomposition of the electrolyte components. After 3 hours reaction time, the reactor was cooled to 16.3°C. Pressure of the reactor was recorded as 11.8 bars. Pressure was released before opening the reactor. Delithiated solids and lithium-containing liquid were separated using vacuum filtration. Reaction resulted lithium yield of approximately 77.7%, with Li concentration of 3.8 g/l.

### Example 8: A reducing agent free delithiation leaching by using CO₂

Nickel sulphate solution was diluted to 0.67 M and mixed with 20 grams of Ni-rich black mass and added to an autoclave reactor. The reactor was closed, atmosphere was first purged with CO₂ and then pressurized with CO₂. The reactor was heated to 180°C. After reaction time of 90 minutes, the reactor was cooled to room temperature. One of reactor valves was opened to release CO₂ pressure. The reactor was opened. Lithium-containing liquid and delithiated solids as leaching residue were separated by using vacuum filtration. Reaction resulted lithium yield of approximately 88% in the liquid, with Li concentration of 0.36% in the dried Li-deficient leaching residue.

The Li-deficient leaching residue was leached using 2.15 M H₂SO₄ solution and S/L 300 g/l at 90°C temperature for 2-hour period. Liquid and solids were separated by vacuum filtration. Reaction resulted solution with nickel concentration of 101 g/l. Yield of nickel was approximately 97%. Correspondingly, lithium concentration of the solution was 1.1 g/l and manganese only 26 mg/l. Manganese concentration in solid Li-deficient material was 1.2%, but in graphite residue it was concentrated to 3.7%.

### Example 9. A use of delithiated cathode material

15.5 grams of LNCM cathode material (83 mol-% nickel) was delithiated using 90 ml of 2 M H₂SO₄ to obtain 8.95 grams of powder (Ni 48 wt-%, Co 10.9 wt-% & Mn 4.6 wt-%). 4.98 grams of obtained powder was added to 250 ml of NCM solution (Ni 87 g/l, Co 9.4 g/l, Mn 10 g/l and H₂SO₄ 27 g/l). Table 2 shows composition of starting solution and metal content at different intervals. After 60 minutes of reaction at 95°C 3.86 grams of precipitate was separated by filtration. Composition of filtrate was following: Ni 100 g/l, Co 9.8 g/l and Mn 3.9 g/l. Obtained precipitate was analyzed by ICP-OES to contain 40.8 wt-% of manganese, 0.27 wt-% of cobalt and 0.14 wt-% of nickel.

**Table 2. Composition of the solution in Example 9**

| t (min) | Li (mgl) | Ni (g/l) | Co (g/l) | Mn (g/l) |
|---|---|---|---|---|
| 0 | <0.3 | 87 | 9.4 | 9.9 |
| 5 | <3 | 82.3 | 8.4 | 5.5 |
| 15 | 5.5 | 93.3 | 9.3 | 3.8 |
| 30 | 6.2 | 93.4 | 9.3 | 3.7 |
| 60 | 7.6 | 100 | 9.8 | 3.9 |

### Example 10. A use of delithiated cathode material

Similar delithiation process was applied to LNCM cathode material to obtain 9.04 grams of powder having nickel content of 47 wt-% (Co 11 wt-%, Mn 4.7 wt-% and Li 0.2 wt-%). 5 grams of obtained powder was used for manganese precipitation reaction. Reaction volume was 250 ml and sulfuric acid concentration 15 g/l. Table 3 shows composition of starting solution and metal content at different intervals. After 30 minutes of reaction time, solids and liquid was separated by vacuum filtration. Obtained precipitate was analyzed by ICP-OES to contain 37 wt-% of manganese, 0.92 wt-% of cobalt and 0.85 wt-% of nickel.

**Table 3. Composition of the solution in Example 10**

| t (min) | Li (mg/l) | Ni (g/l) | Co (g/l) | Mn (g/l) |
|---|---|---|---|---|
| 0 | 40.2 | 81.1 | 9.7 | 13.2 |
| 5 | 23 | 98.9 | 9.7 | 9.3 |
| 15 | 35 | 97 | 9.5 | 7.5 |
| 30 | 38.8 | 100 | 9.7 | 7.7 |

## Claims

1. A method for separating manganese in leaching of cobalt and/or nickel from delithiated solid raw material obtained from a delithiation leaching step, the method comprising
- providing delithiated solid raw material (10) comprising cobalt and/or nickel, wherein the solid raw material is obtained from a delithiation leaching step (8),
- providing acidic solution (12), such as sulfuric acid solution,
- combining the delithiated solid raw material with the acidic solution,
- allowing cobalt and/or nickel in the delithiated solid raw material to leach to obtain a leach solution (14) comprising cobalt and/or nickel,
- providing manganese in the leach solution as the only reducing agent to reduce cobalt and/or nickel in the leach solution, and
- allowing the manganese to precipitate as manganese dioxide (16) while the cobalt and/or nickel are dissolved (18).

2. The method of claim 1, wherein the delithiated solid raw material (10) comprises manganese.

3. The method of claim 1 or 2, wherein the delithiated solid raw material (10) is obtained from cathode material (6).

4. The method of claim 3, wherein the cathode material (6) comprises lithium-ion battery black mass comprising lithium, cobalt, nickel and manganese.

5. The method of any of preceding claims, wherein the delithiated solid raw material is obtained from a reducing agent free delithiation leaching step (8).

6. The method of any of preceding claims, comprising
- providing the manganese by adding manganese to the leach solution (14) comprising cobalt and/or nickel.

7. The method of any of claims 1-5, comprising
- providing the manganese by adding manganese to the acidic solution (12) before combining with cobalt and/or nickel.

8. The method of any of preceding claims, comprising adding manganese in an amount sufficient to adjust the concentration of manganese to a level required to enable complete leaching of the cobalt and/or the nickel, preferably comprising adding manganese in an amount to avoid excess manganese concentration.

9. The method of any of preceding claims, wherein the leaching and/or manganese precipitation is carried out at a temperature in the range of 70-100°C, such as 70-95°C, preferably for 30-180 minutes.

10. The method of any of preceding claims, comprising recovering the precipitated manganese dioxide (16).

11. The method of any of preceding claims, comprising recovering the cobalt and/or the nickel from the leach solution (18).

12. The method of any of preceding claims, wherein the method is a method for selectively leaching cobalt and/or nickel from delithiated solid raw material (10).

13. The method of any of preceding claims, wherein the method is a method for purifying cobalt- and/or nickel-containing solutions or dispersions from manganese, and/or a method for removing manganese from a solution or a dispersion comprising cobalt and/or nickel or from delithiated solid raw material (10).

14. The method of any of preceding claims, comprising carrying out the method in the absence of further reducing agents, such as sulphur dioxide, hydrogen peroxide or organic acids, for example citric acid; solvent extraction; ion exchange and/or oxidation using further oxidation chemicals.

15. Use of delithiated solid raw material (10) obtained from a delithiation leaching step (8), the delithiated solid raw material (10) comprising cathode material, such as delithiated lithium-ion battery black mass, in the method for separating manganese in leaching of cobalt and/or nickel from delithiated solid raw material of any of preceding claims.

## Patentansprüche

1. Verfahren zum Trennen von Mangan bei der Auslaugung von Kobalt und/oder Nickel aus delithiertem festem Rohmaterial, das aus einem Delithierungsauslaugungsschritt erhalten wurde, das Verfahren umfassend:
- Bereitstellen von delithiertem festem Rohmaterial (10), umfassend Kobalt und/oder Nickel, wobei das feste Rohmaterial aus einem Delithierungsauslaugungsschritt (8) erhalten wird,
- Bereitstellen einer sauren Lösung (12), wie beispielsweise einer Schwefelsäurelösung,
- Kombinieren des delithiierten festen Rohmaterials mit der sauren Lösung,
- Ermöglichen des Auslaugens von Kobalt und/oder Nickel in dem delithiierten festen Rohmaterial, um eine Auslauglösung (14) zu erhalten, die Kobalt und/oder Nickel umfasst,
- Bereitstellen von Mangan in der Laugenlösung als einziges reduzierendes Mittel, um Kobalt und/oder Nickel in der Laugenlösung zu reduzieren, und
- Ermöglichen, dass das Mangan als Mangandioxid ausfällt (16), während das Kobalt und/oder Nickel gelöst wird (18).

2. Verfahren nach Anspruch 1, wobei das delithiierte feste Rohmaterial (10) Mangan umfasst.

3. Verfahren nach Anspruch 1 oder 2, wobei das delithiierte feste Rohmaterial (10) aus Kathodenmaterial (6) erhalten wird.

4. Verfahren nach Anspruch 3, wobei das Kathodenmaterial (6) eine Lithium-Ionen-Batterieschwarzmasse umfasst, umfassend Lithium, Kobalt, Nickel und Mangan.

5. Verfahren nach einem der vorstehenden Ansprüche, wobei das delithiierte feste Rohmaterial aus einem reduzierungsmittelfreien Delithierungslaugungsschritt (8) erhalten wird.

6. Verfahren nach einem der vorstehenden Ansprüche, umfassend:
- Bereitstellen des Mangans durch Hinzufügen von Mangan zu der Laugenlösung (14), die Kobalt und/oder Nickel umfasst.

7. Verfahren nach einem der Ansprüche 1 bis 5, umfassend:
- Bereitstellen des Mangans durch Hinzufügen von Mangan zu der sauren Lösung (12) vor dem Kombinieren mit Kobalt und/oder Nickel.

8. Verfahren nach einem der vorstehenden Ansprüche, umfassend das Hinzufügen von Mangan in einer Menge, die ausreicht, um die Mangankonzentration auf ein Niveau einzustellen, das erforderlich ist, um eine vollständige Auslaugung des Kobalts und/oder Nickels zu ermöglichen, vorzugsweise umfassend das Hinzufügen von Mangan in einer Menge, die eine überschüssige Mangankonzentration verhindert.

9. Verfahren nach einem der vorstehenden Ansprüche, wobei das Auslaugen und/oder die Manganausfällung bei einer Temperatur im Bereich von 70-100 °C, wie 70-95 °C, vorzugsweise 30-180 Minuten lang, durchgeführt wird.

10. Verfahren nach einem der vorstehenden Ansprüche, umfassend das Gewinnen des ausgefällten Mangandioxids (16).

11. Verfahren nach einem der vorstehenden Ansprüche, umfassend das Gewinnen des Kobalts und/oder des Nickels aus der Laugenlösung (18).

12. Verfahren nach einem der vorstehenden Ansprüche, wobei das Verfahren ein Verfahren zum selektiven Auslaugen von Kobalt und/oder Nickel aus delithiertem festen Rohmaterial (10) ist.

13. Verfahren nach einem der vorstehenden Ansprüche, wobei das Verfahren ein Verfahren zum Reinigen von kobalt- und/oder nickelhaltigen Lösungen oder Dispersionen von Mangan und/oder ein Verfahren zum Entfernen von Mangan aus einer Lösung oder einer Dispersion, die Kobalt und/oder Nickel umfasst, oder aus delithiertem festem Rohmaterial (10) ist.

14. Verfahren nach einem der vorstehenden Ansprüche, umfassend das Durchführen des Verfahrens in Abwesenheit von weiteren reduzierenden Mitteln, wie Schwefeldioxid, Wasserstoffperoxid oder organischen Säuren, zum Beispiel Zitronensäure, Lösungsmittelextraktion, Ionenaustausch und/oder Oxidation unter Verwendung weiterer Oxidationschemikalien.

15. Verwendung von delithiiertem festem Rohmaterial (10), erhalten aus einem Delithierungsauslaugungsschritt (8), wobei das delithiierte feste Rohmaterial (10) Kathodenmaterial, wie delithiierte Lithium-Ionen-Batterieschwarzmasse, umfasst, in dem Verfahren zum Trennen von Mangan beim Auslaugen von Kobalt und/oder Nickel aus delithiiertem festem Rohmaterial nach einem der vorstehenden Ansprüche.

## Revendications

1. Procédé de séparation du manganèse lors de la lixiviation du cobalt et/ou du nickel à partir d'une matière première solide délitée, obtenue à l'issue d'une étape de lixiviation par délithiation, le procédé comprenant
- la fourniture d'une matière première solide délithiée (10) comprenant du cobalt et/ou du nickel, dans lequel la matière première solide est obtenue à l'issue d'une étape de lixiviation par délithiation (8), - la fourniture d'une solution acide (12), telle qu'une solution d'acide sulfurique,
- le mélange de la matière première solide délithiée avec la solution acide,
- le fait de permettre la lixiviation du cobalt et/ou du nickel présents dans la matière première solide délithiée afin d'obtenir une solution de lixiviation (14) contenant du cobalt et/ou du nickel,
- l'apport de manganèse dans la solution de lixiviation en tant que seul agent réducteur pour réduire le cobalt et/ou le nickel présents dans la solution de lixiviation, et
- le fait de permettre la précipitation du manganèse sous forme de dioxyde de manganèse (16) tandis que le cobalt et/ou le nickel sont dissous (18).

2. Procédé selon la revendication 1, dans lequel la matière première solide délithiée (10) comprend du manganèse.

3. Procédé selon la revendication 1 ou 2, dans lequel la matière première solide délithiée (10) est obtenue à partir du matériau de cathode (6).

4. Procédé selon la revendication 3, dans lequel le matériau de cathode (6) comprend une masse noire pour batterie lithium-ion contenant du lithium, du cobalt, du nickel et du manganèse.

5. Procédé selon l'une quelconque des revendications précédentes, dans lequel la matière première solide délithiée est obtenue à l'issue d'une étape de lixiviation par délithiation (8) sans agent réducteur.

6. Procédé selon l'une quelconque des revendications précédentes, comprenant
- l'apport de manganèse par ajout de manganèse à la solution de lixiviation (14) comprenant du cobalt et/ou du nickel.

7. Procédé selon l'une quelconque des revendications 1 à 5, comprenant
- la fourniture de manganèse en ajoutant du manganèse à la solution acide (12) avant de la mélanger avec du cobalt et/ou du nickel.

8. Procédé selon l'une quelconque des revendications précédentes, comprenant l'ajout de manganèse en une quantité suffisante pour ajuster la concentration en manganèse à un niveau nécessaire pour permettre une lixiviation complète du cobalt et/ou du nickel, comprenant de préférence l'ajout de manganèse en une quantité permettant d'éviter une concentration excessive en manganèse.

9. Procédé selon l'une quelconque des revendications précédentes, dans lequel la lixiviation et/ou la précipitation du manganèse est effectuée à une température dans la plage de 70 à 100 °C, telle que 70 à 95 °C, de préférence pendant 30 à 180 minutes.

10. Procédé selon l'une quelconque des revendications précédentes, comprenant la récupération du dioxyde de manganèse précipité (16).

11. Procédé selon l'une quelconque des revendications précédentes, comprenant la récupération du cobalt et/ou du nickel à partir de la solution de lixiviation (18).

12. Procédé selon l'une quelconque des revendications précédentes, dans lequel le procédé est un procédé permettant de lixivier de manière sélective le cobalt et/ou le nickel à partir d'une matière première solide délithiée (10).

13. Procédé selon l'une quelconque des revendications précédentes, dans lequel le procédé est un procédé de purification de solutions ou de dispersions contenant du cobalt et/ou du nickel à partir de manganèse, et/ou un procédé d'élimination du manganèse d'une solution ou d'une dispersion comprenant du cobalt et/ou du nickel ou d'une matière première solide délithiée (10).

14. Procédé selon l'une quelconque des revendications précédentes, comprenant la mise en œuvre du procédé en l'absence d'autres agents réducteurs, tels que le dioxyde de soufre, le peroxyde d'hydrogène ou des acides organiques, par exemple l'acide citrique; l'extraction par solvant; l'échange d'ions et/ou l'oxydation à l'aide d'autres produits chimiques d'oxydation.

15. Utilisation d'une matière première solide délithiée (10) obtenue à l'issue d'une étape de lixiviation de délithiation (8), la matière première solide délithiée (10) comprenant un matériau de cathode, tel qu'une masse noire de batterie lithium-ion délithiée, dans le procédé de séparation du manganèse lors de la lixiviation du cobalt et/ou du nickel à partir d'une matière première solide délithiée selon l'une quelconque des revendications précédentes.
